**Europäisches Patentamt**

**European Patent Office**

**Office européen des brevets**

(19)

(11) Numéro de publication: **0 168 281**

**B1**

(12) # FASCICULE DE BREVET EUROPÉEN

(45) Date de publication du fascicule du brevet:
19.04.89

(51) Int. Cl.⁴: **C 01 B 25/41**

(21) Numéro de dépôt: **85401084.0**

(22) Date de dépôt: **03.06.85**

(54) **Procédé de préparation d'un tripolyphosphate de sodium hexahydraté à haut pouvoir absorbant et tripolyphosphate ainsi préparé.**

(30) Priorité: **08.06.84 FR 8409002**

(43) Date de publication de la demande:
**15.01.86 Bulletin 86/3**

(45) Mention de la délivrance du brevet:
**19.04.89 Bulletin 89/16**

(84) Etats contractants désignés:
**AT BE CH DE FR GB IT LI LU NL SE**

(56) Documents cité:
**EP-A-0 071 021**
**FR-A-1 303 281**
**FR-A-1 559 307**

(73) Titulaire: **RHONE- POULENC CHIMIE, 25, quai Paul Doumer, F-92408 Courbevoie Cédex (FR)**

(72) Inventeur: **Joubert, Daniel, Route du Stade Reyrieux, F-01600 Trevoux (FR)**

(74) Mandataire: **Le Pennec, Magali, RHONE- POULENC INTERSERVICES Service Brevets Chimie 25, Quai Paul Doumer, F-92408 Courbevoie Cédex (FR)**

## Description

La présente invention concerne un procédé de préparation d'un tripolyphosphat de sodium hexahydrate à haut pouvoir absorbant, en vue notamment de la préparation de compositions détergentes.

La préparation d'un tripolyphosphate de sodium (TPP) hexahydraté se fait d'une manière bien connue.

Le TPP de sodium, à l'état anhydre, ou pratiquement anhydre est introduit dans l'eau, sous agitation, et on laisse s'effectuer la réaction de recristallisation, qu'on peut schématiser ainsi: TPP anhydre / eau / TPP dissous / sursaturation / TPP 6H$_2$O recristallisé.

Lorsqu'on estime que la réaction exothermique d'hydratation du TPP est terminée, on procède au séchage généralement par atomisation et on obtient une poudre granulaire, légère, de densité inférieure à 1, comprise entre 0,3 et 0,8.

Les produits préparés selon cette technique connue présentent cependant des défauts ou des insuffisances par rapport aux qualités que l'on cherche à atteindre. En particulier, ils présentent de faibles capacités d'absorption ou de rétention des ingrédients liquides. Or cette capacité d'absorption est une qualité essentielle, car elle permet l'incorporation plus ou moins importante des additifs entrant dans les formulations détergentes du type par exemple des agents de surface non ioniques. Par ailleurs, la solidité ou la résistance à l'attrition des grains peut aussi ne pas être satisfaisante.

Il est connu d'après le brevet FR-A-1 559 307 un procédé qui consiste à hydrater la phase 1 d'un TPP contenant une faible teneur en phase 1, à mélanger ce TPP hydraté avec un TPP non hydraté à basse teneur en phase 1 de façon à obtenir un TPP soluble dans l'eau.

Il est encore connu d'après le brevet FR-A-1 303 281 un procédé de préparation de composition détergente ayant une faible fraction de TPP sous forme d'hexahydrate. Pour obtenir ce détergent on introduit un TPP ayant une haute teneur en phase 1, de l'eau en quantité supérieure à la quantité nécessaire pour hydrater le TPP ayant une haute teneur en phase 1, un composé non-ionique, un adjuvant et un TPP ayant une haute teneur en phase 2. Le produit final n'est constitué qu'en partie d'hexahydrates.

L'objet principal de l'invention est donc de préparer un TPP de sodium hexahydraté qui présente un pouvoir absorbant élevé ainsi qu'une bonne solidité des grains.

Dans ce but, le procédé de préparation d'un tripolyphosphate de sodium hexahydraté selon l'invention est caractérisé en ce qu'il comporte les étapes suivantes:

- on prend un premier tripolyphosphate contenant au moins 55 % de phase 1 sur lequel on pulvérise de l'eau de façon à former des germes d'hexahydrate,
- on prend un deuxième tripolyphosphate contenant au plus 10 % de phase 1 sur lequel on pulvérise de l'eau de façon à former des germes d'hexahydrate,
- on mélange les deux tripolyphosphates ainsi traités de façon à ce que le taux global en phase 1 du mélange soit compris entre 40 et 60 %,
- on introduit le mélange obtenu dans de l'eau ou un milieu aqueux pour former une suspension,
- on sèche ladite suspension ce par quoi on obtient du tripolyphosphate de sodium hexahydraté.

Le tripolyphosphate de sodium qui peut être préparé selon le procédé ci-dessus est caractérisé en ce qu'il a un volume poreux d'au moins 0,70cm$^3$/g et en ce qu'il présente une majorité de sa porosité intercristalline, c'est-à-dire au moins 80 %, pour les pores de taille située entre 0,5 µm et 30 µm.

Un tel tripolyphosphate est particulièrement avantageux, compte tenu du fait que ce sont les pores qui présentent la taille décrite ci-dessus qui sont particulièrement adéquates à l'absorption des agents de surface non ioniques.

Selon une variante de l'invention, on pulvérise sur les tripolyphosphates anhydres précités une suspension dans l'eau de tripolyphosphate.

Selon une autre variante préférée de l'invention, on pulvérise sur chacun des TPP une suspension dans l'eau du même TPP.

D'autres caractéristiques et avantages de l'invention seront mieux compris à la lecture de la description qui va suivre et d'exemples concrets mais non limitatifs de mise en oeuvre du procédé.

Comme on l'a vu plus haut, le procédé de l'invention part de deux TPP anhydres spécifiques.

En ce qui concerne le premier TPP sa caractéristique essentielle est qu'il se présente majoritairement sous la forme de phase 1. Plus précisément, il est préférable que ce TPP comporte entre 60 et 100 % de phase 1. D'une manière générale, on a intérêt à utiliser comme premier TPP, un TPP le plus riche possible en phase 1.

La préparation de ce TPP n'est pas un objet de l'invention. Cette préparation peut se faire par toute technique convenable connue. Par exemple, la polycondensation du TPP peut se faire dans un four tournant. On notera enfin que le niveau de pureté de ce premier TPP n'est pas critique, on entend par là la teneur en impuretés métalliques, en particulier en alcalino-terreux tels que calcium et magnésium.

En ce qui concerne le deuxième TPP anhydre, celui-ci ne contient pas plus de 10 % de phase 1. D'une manière générale, il est avantageux d'utiliser comme deuxième TPP un TPP le plus riche possible en phase 2.

Ce second TPP peut être aussi préparé selon toute méthode connue et convenable.

Il est par contre préférable que le second TPP soit purifié en impuretés métalliques telles que le calcium et le magnésium.

Ainsi, les meilleurs résultats seront obtenus pour des TPP préparés à partir de liqueurs ayant, avant polycondensation, une teneur en Ca et Mg totale inférieure à 100 ppm. Les TPP ainsi préparés présentent une teneur totale en ces mêmes éléments de 80 ppm. Une telle liqueur peut, par exemple, être obtenue par extraction liquide-liquide selon des méthodes connues.

Les deux TPP définis plus haut, après refroidissement et broyage éventuels sont ensuite amorcés par une pulvérisation d'eau ou d'un milieu aqueux.

Cette amorce a pour but de faire apparaitre dans le produit encore pratiquement anhydre des germes d'hexahydrates qui vont favoriser la recristallisation, augmenter sa cinétique et surtout éviter la formation de grumeaux ou de nodules mal cristallisés ou incomplètement hydratés, particulièrement gênants dans tous les procédés de préparation de détergent mettant en oeuvre des suspensions ou "slurries".

Cette amorce peut se faire par pulvérisation d'eau, par exemple de 0,1 à 3 % d'eau par rapport au TPP anhydre. Dans ce cas, après un certain temps de mûrissement, apparaissent les germes d'hexahydrates.

Cependant, selon une variante préférée de l'invention, cette amorce se fait par une pulvérisation d'une suspension aqueuse de TPP.

Cette suspension peut se préparer de la manière suivante par exemple. On ajoute à de l'eau, eau permutée notamment, une quantité suffisante de TPP pour être en sursaturation. Cette quantité de TPP est généralement d'au moins 18 % et elle est telle que l'on obtienne une suspension pompable et homogène. De préférence, on prépare une suspension à 30 à 35 % de TPP. La suspension est maintenue entre 60° C et 80° C et agitée pendant 10 minutes au moins.

La pulvérisation se fait selon tout moyen connu. Généralement, la quantité de suspension pulvérisée est de 0,2 à 3 % en poids par rapport au TPP anhydre.

Généralement, et d'une manière préférentielle, on pulvérise sur le premier TPP une suspension de ce même TPP et sur le second une suspension de ce même second TPP.

Industriellement, et dans le cas preferentiel exposé ci-dessus, le TPP "amorcé" après pulvérisation peut être en partie recyclé et renvoyé dans le bac de préparation de la suspension. On facilite l'hydratation du TPP et donc la préparation de la suspension.

L'avantage de la pulvérisation d'une suspension réside dans le fait que les germes d'hexahydrates sont préformés dans la suspension. Ils seront donc présents immédiatement dans le TPP anhydre sous une forme très fine, particulièrement adaptée sans qu'il soit nécessaire dans ce cas de recourir à un mûrissement.

Les TPP ainsi traités se présentent sous la forme d'une poudre. Ils sont ensuite mélangés intimement. Les proportions des deux TPP sont choisies de manière telle que le taux global de phase 1 du mélange soit compris entre 40 % et 60 %.

Le mélange de TPP obtenu est ensuite mis sous forme d'une suspension ou "slurry" par addition dans l'eau. La bouillie est séchée généralement par atomisation et on obtient un produit hexahydraté sous forme pulvérulente et granulaire. La mise en suspension et l'atomisation se font selon tout procédé connu. Notamment, la suspension est préparée à une température (au moment de l'introduction du TPP) comprise de préférence entre 50 et 80° C.

On se place dans des conditions telles, notamment en température, que l'on obtienne une hydratation et recristallisation totale des deux TPP. Le séchage doit être réalisé de manière à éviter la déshydratation de l'hexahydrate; ainsi, la température maximale dans le cas de l'atomisation notamment (température du produit à la sortie de la tour d'atomisation) ne devrait pas dépasser 105° C.

Enfin, il est possible d'ajouter à la suspension obtenue à partir du mélange des deux TPP tout additif convenable, soit pour agir sur la recristallisation du TPP $6H_2O$, ou sur la proportion de TPP $6H_2O$ recristallisé par rapport au TPP restant dissous, soit pour améliorer la solidité des grains obtenus.

Dans le premier cas, et pour la recristallisation du TPP, il s'agit surtout des agents de surface, en particulier les surfactifs non ionogènes, qui, utilisés à petite dose, influent sur la vitesse de recristallisation du TPP $6H_2O$, et également sur la taille des cristaux. Des ajouts, inférieurs pondéralement à 1 % par rapport à l'ensemble de la suspension, d'agents de surface non ioniques éthoxylés solubles, sont un élément favorable à l'obtention d'un atomisat de bonne qualité.

Par ailleurs on utilise des additifs présentant des fonctions alcools, mono-alcools ou polyols, qui influent sur la proportion TPP $6H_2O$/TPP dissous, en l'augmentant, ce qui a pour effet d'accroître encore la porosité obtenue, le séchage de la partie dissoute conduisant logiquement à l'obturation de certains pores, mais aussi à la consolidation des agrégats formés.

Des doses d'alcools, par exemple éthanol, méthanol, isopropanol, butanol, de 0,1 à 5 % par rapport à l'ensemble de la suspension, sont favorables, après séchage à l'obtention d'une haute porosité.

Dans le deuxième cas, en ce qui concerne les additifs capables d'améliorer la résistance à l'attrition des grains formés, on utilise essentiellement des produits filmogènes, minéraux ou organiques, tels le disilicate de sodium à l'état prédissous, les polymères organiques filmogènes ou liants tels l'amidon, la gélatine, l'alcool polyvinylique, la carboxyméthylcellulose.

Les doses d'ajouts favorables sont variables mais doivent être limitées pour éviter après séchage, d'aboutir à des obturations de la porosité potentielle offerte par les arrangements cristallins obtenus dans la suspension.

Des exemples concrets vont maintenant être donnés.

### Exemple 1

Cet exemple illustre le procédé de l'invention.
On utilise deux TPP présentant les caractéristiques suivantes:

### TPP1

Ce TPP contient 65 % de phase 1, et présente une perte à 550°C de 0,3 %, une granulométrie caractérisée par des refus au tamis de 315 $\mu$ inférieur à 10 %, un diamètre moyen de 100 $\mu$ environ, une teneur en TPP "vrai" de 92,5 % et une teneur en impuretés Ca++ 300 ppm et Mg 250 ppm. Il est amorcé par 3 % d'une suspension constituée de 35 % de ce même TPP dispersé et agité pendant 10 mn, à 65°C dans l'eau. L'amorce se fait par pulvérisation de cette suspension sur le TPP.

### TPP2

Ce TPP contient 92 % de variété 2. Il présente une perte à 550°C de 0,6 %, une granulométrie caractérisée par des refus au tamis de 315 $\mu$ de 20 % maximum, un diamètre moyen de 120 $\mu$, une teneur en TPP de 96,5 % et une teneur en calcium de 40 ppm et en magnésium de 20 ppm. Il est amorcé par 2 % d'une suspension constituée par 25 g de ce même TPP dans 75 g d'eau, qui a été portée à 60°C et agitée pendant 15 mn.

On mélange 1 kg de chacun de ces composants pendant 5 mn avec un appareil de laboratoire "Lödige M5G".

Ce mélange selon l'invention est mis en oeuvre dans un "slurry" d'atomisation selon la méthode suivante, puis séché à l'aide d'un sécheur atomiseur de laboratoire type BUCHI.

| | | |
|---|---|---|
| Eau de ville, dureté 30°th, 60°C | 1 | kg |
| TPP, mélange selon l'invention | 950 | g |
| Agitation à 200 t/mn | 12 | mn |
| Température en fin d'agitation | 78 | °C |

Après sèchage on obtient un produit contenant 18,5 % d'eau (mesure par perte à 550°C) ce qui signifie que la plus grande partie du produit obtenu est du tripolyphosphate de sodium à l'état d'hexahydrate sous forme pulvérulente et granulaire. Le pouvoir absorbant de ce produit, mesuré à l'aide d'un test dans lequel on utilise un surfactif non ionique liquide, le "Cémulsol DB 311", est de 38,5 g de liquide pour 100 g de TPP hexahydraté. Le mélange obtenu est un produit non collant d'écoulement libre, ce qui démontre que l'absorption est correcte et que la limite d'absorption n'a pas été dépassée.

La départition poreuse, mesurée par porosimètre à mercure travaillant sous pression, du TPP obtenu selon cet exemple est la suivante:

| Taille des pores | pourcentage du volume poreux total |
|---|---|
| > 30 $\mu$m | 8 % |
| 10 $\mu$m - 30 $\mu$m | 26 % |
| 1 $\mu$m - 10 $\mu$m | 33 % |
| 0,5 $\mu$m - 1 $\mu$m | 21 % |
| < 0,5 $\mu$m | 12 % |
| Volume poreux total | 0,76 cm³/g |

Des exemples comparatifs sont donnés ci-dessous.

### Exemple 2 (comparatif)

Dans les mêmes conditions, on prépare une suspension de TPP qui est ensuite séchée, mais le mélange selon l'invention est remplacé par le TPP1, seul amorcé.

Le produit après séchage présente une perte à 550°C de 19,8 %.

Il est cependant beaucoup plus friable que le produit obtenu à l'exemple 1.

Sa capacité d'absorption pour le non-ionique liquide est de 24 g pour 100 g de TPP hexahydraté.

### Exemple 3 (comparatif)

Toujours dans des conditions similaires, on met en oeuvre le TPP2 amorcé.

A la différence des exemples précédents, pour la mise en slurry la durée d'agitation est de 18 mn et la température de fin de réaction est de 72°C.

Après séchage, le produit présente une perte à 550°C de 17,1 %, le TPP est donc toujours majoritairement sous forme hexahydrate, mais une partie non négligeable a été déshydratée au séchage.

Le pouvoir absorbant n'est plus que de 18 g de liquide pour 100 g de poudre, et le produit est extrêmement friable.

### Exemple 4 (comparatif)

On utilise un nouveau tripolyphosphate présentant une teneur en phase 1 de 35 % environ, mais obtenu en une seule polycondensation et non par un mélange. Le produit est amorce par pulvérisation de 2 % d'eau, maturation 24 heures et rebroyage, de façon à obtenir un diamètre moyen de 100 μ environ.

On notera que la teneur en phase 1 est identique à celle du mélange selon l'invention, décrit et utilisé dans l'exemple 1.

Après séchage, le produit obtenu contient 18,2 % d'eau.

Son pouvoir absorbant est de 22 g de liquide pour 100 g de poudre.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Procédé de préparation d'un tripolyphosphate de sodium hexahydraté à haut pouvoir absorbant caractérisé en ce qu'il comporte les étapes suivantes:
- on prend un premier tripolyphosphate contenant au moins 55 % de phase 1 sur lequel on pulvérise de l'eau de façon à former des germes d'hexahydrate,
- on prend un deuxième tripolyphosphate contenant au plus 10 % de phase 1 sur lequel on pulvérise de l'eau de façon à former des germes d'hexahydrate,
- on mélange les deux tripolyphosphates ainsi traités de façon à ce que le taux global en phase 1 du mélange soit compris entre 40 et 60 %,
- on introduit le mélange obtenu dans de l'eau ou un milieu aqueux pour former une suspension,
- on sèche ladite suspension ce par quoi on obtient du tripolyphosphate de sodium hexahydraté.
2. Procédé selon la revendication 1, caractérisé en ce qu'on pulvérise sur les tripolyphosphates anhydres précités une suspension dans l'eau de tripolyphosphate.
3. Procédé selon la revendication 2, caractérisé en ce qu'on pulvérise sur le premier tripolyphosphate une suspension aqueuse de ce même tripolyphosphate et en ce que l'on pulvérise sur le secomd tripolyphosphate une suspension aqueuse de ce même second tripolyphosphate.
4. Procédé selon l'une quelconque des revendications précédentes, caractérisé en ce qu'on utilise un second tripolyphosphate purifié en calcium et en magnésium.

## Patentansprüche

1. Verfahren zur Herstellung eines Natriumtripolyphosphat-Hexahydrats mit hohem Absorptionsvermögen, dadurch gekennzeichnet, daß es die nachfolgenden Schritte umfaßt:
- Man geht aus von einem ersten Tripolyphosphat enthaltend wenigstens 55 % einer Phase 1 auf das man Wasser zerstäubt, so daß Hexahydratkeime gebildet werden,
- man nimmt ein zweites Tripolyphosphat enthaltend höchstens 10 % einer Phase 1 auf das man Wasser aufstäubt, so daß Hexahydratkeime gebildet werden,
- man mischt die beiden so behandelten Tripolyphosphate in solcher Weise, daß der Gesamtgehalt an Phase 1 im Gemisch zwischen 40 und 60 % liegt,
- zur Bildung einer Suspension gibt man das erhaltene Gemisch in Wasser oder in ein wässriges Milieu,
- man trocknet diese Suspension, wobei man Natriumtripolyphosphat-Hexahydrat erhält.
2. Verfahren nach Anspruch 1, dadurch gekennzeichnet, daß man auf die vorgenannten wasserfreien Tripolyphosphate eine Suspension von Tripolyphosphat in Wasser aufsprüht.
3. Verfahren nach Anspruch 2, dadurch gekennzeichnet, daß man auf das erste Tripolyphosphat eine wässrige Suspension dieses gleichen Tripolyphosphats aufsprüht und daß man auf das zweite Tripolyphosphat eine wässrige Suspension des gleichen zweiten Tripolyphosphats aufsprüht.
4. Verfahren nach einem der vorhergehenden Ansprüche, dadurch gekennzeichnet, daß man ein von Calcium und Magnesium gereinigtes zweites Tripolyphosphat verwendet.

## Claims

1. Process for the preparation of a sodium tripolyphosphate hexahydrate of high absorptive capacity, characterized in that it comprises the following steps:
- a first tripolyphosphate containing at least 55 % of phase 1 is taken, onto which water is sprayed so as to form hexahydrate nuclei,
- a second tripolyphosphate containing at most 10 % of phase 1 is taken, onto which water is sprayed so as to form hexahydrate nuclei,
- the two tripolyphosphates thus treated are mixed so that the overall proportion of phase in the mixture is between 40 and 60 %,
- the mixture obtained is introduced into water or an aqueous medium to form a suspension, and
- the said suspension is dried, whereby sodium tripolyphosphate hexahydrate is obtained.
2. Process according to Claim 1, characterized in that a suspension of tripolyphosphate in water is sprayed onto the abovementioned anhydrous tripolyphosphates.
3. Process according to Claim 2, characterized in that an aqueous suspension of the first tripolyphosphate is sprayed onto this same tripolyphosphate and in that an aqueous suspension of the second tripolyphosphate is sprayed onto this same second tripolyphosphate.

4. Process according to any one of the preceding Claims, characterized in that a second tripolyphosphate purified in respect of calcium and of magnesium is employed.